# EUROPEAN PATENT SPECIFICATION

(11) **EP 2 226 997 B1**
(45) Date of publication and mention of the grant of the patent: **09.09.2020**
(21) Application number: 09003274.9
(22) Date of filing: 06.03.2009
(51) Int. Cl.: G06Q 20/40, G06Q 20/32, H04W 4/24, H04M 15/00

(54) **BILLING MECHANISM FOR A MOBILE COMMUNICATION NETWORK**
ABRECHNUNGSMECHANISMUS FÜR EIN MOBILES KOMMUNIKATIONSNETZWERK
MÉCANISME DE FACTURATION POUR RÉSEAU DE COMMUNICATION MOBILE

(43) Date of publication of application: 08.09.2010
(73) Proprietor: Vodafone Holding GmbH, 40213 Düsseldorf (DE)
(72) Inventor: Koraichi, Najib, 6333 CT Schimmert (NL); Montaner, Javier, 50008 Zaragoza (ES)
(74) Representative: Jostarndt Patentanwalts-AG

(56) References cited:
- EP-A- 0 555 992
- WO-A-01/31879
- WO-A-2008/007228
- WO-A-2008/016553
- WO-A-2008/094308
- KR-A- 20090 006 038
- US-A- 5 857 152
- US-A1- 2001 037 264
- US-A1- 2002 115 424
- US-A1- 2005 027 608
- US-A1- 2006 294 190
- US-A1- 2007 162 553
- US-A1- 2008 171 575
- US-A1- 2008 201 238
- US-A1- 2008 275 820
- US-A1- 2008 305 774

## Description

### Technical Field

The invention relates the field of mobile communications. Particularly, the invention relates to a mobile device adapter module for charging a user of mobile communication device connected to a communication network.

### Background of the invention

One mechanism for billing users of mobile communication devices for utilizing services with costs is the premium SMS (PSMS) mechanism, which is described in US 2006/0149644, for example. The PSMS mechanism is based on the Short Message Service (SMS) provided in mobile communication networks and allows for accounting for services, such as, for example, services for providing traffic information, weather information, sports scores or the like on a mobile communication device or for services for downloading audio files, such as, ring tones, or small applications to a mobile communication device. The service or contents to be downloaded within the service may be ordered via a call or a message sent from a mobile communication device to the service provider. Likewise the service may be offered via a webpage that can be accessed using the mobile communication device.

In the PSMS mechanism, the user is charged a predetermined fee for sending or receiving a SMS message. If the charge is made to the sender of the SMS message, the message may be referred to as mobile originating premium SMS (MO-PSMS) message. A MO-PSMS message is to be sent to a predetermined telephone number and Includes a predetermined content, such as, for example, a keyword given by a service provider. Depending on the mode of payment the user has chosen, charges for MO-PSMS messages may appear on the user's mobile telephone bill or may be deducted from a pre-paid balance.

If the charge is made to a recipient of the SMS message, the message is be referred to as mobile terminating premiums SMS (MT-PSMS) message. Since the SMS billing presently requires the user's consent to the billing process, the user has to "opt-in" and to initiate the billing process. This is usually done by sending a standard SMS message with a specific content to a predetermined telephone number.

From the user's perspective, in the MT-PSMS mechanism and the MO-PSMS mechanism, the billing process is initiated in the same way by sending an SMS message. Thus, in both embodiments, the PSMS mechanism commits the user to compose a message using his mobile communication device. This may be inconvenient for the user. Particularly, when the service with costs is offered via a webpage it is inconvenient for a user to send a message in addition to the interaction with the service via the webpage.

WO 2008/007228 A2 discloses a system and a method for video distribution that use a PSMS mechanism for charging the user. A user who wishes to subscribe to a video service sends a mobile originated SMS message to a service number. Then, the user receives back a mobile terminated message confirming the subscription, and in that message, a phone number is sent to the user. The user can make a video call to the number in order to receive the video content. The user is charged upon the mobile originated or the mobile terminated SMS message.

KR 20090006038 relates to a method for setting opt-in to offer a call back URL mode wireless internet for a wireless communication device. Here, an opt-in decision unit of the device determines the opt-in of the call back URL through an opt-in message received from a server and authenticates the opt-in message.

US 2008/0201238 A1 describes a PSMS billing method, in which a user makes a voice call to a telephone number from a mobile telephone and agrees verbally or by pressing one or more keys to have the charge for a purchase placed on his mobile telephone bill. After the call is terminated, a MT-PSMS message is sent to the user. Alternatively, the user sends the vendor an MO-PSMS message. WO2008/094308A1 relates to a SIM toolkit application to track phone usage and location. The application causes the SIM card of a portable communication device to track device communication activity and/or device location and to upload the device activity data to a remote server. In the server, the data can be accessed by the device user or an interested and authorized third party. WO01/31879A1 also relates to the SIM toolkit. Here, the SIM toolkit protocol is used for a communication between a terminal and a server that executes an application without transferring it to the terminal.

EP0555992A1 describes a data adapter for a radio telephone. The adapter can be coupled to the telephone using a connector fitting the telephone's SIM receiving means and includes means for removably receiving the SIM. The adapter is configured for converting received data into SMS format thereby enabling the telephone to be used for receiving/transmitting data messages other than normal SMS messages.

US 2008/0275820 A1 discloses an account security apparatus, including a memory device for storing a limitation or restriction on the use of an account transmitted to a receiver from the communication device associated with individual account holder, and a processing device for processing and authorization request of a transaction or use of the account.

US 2001/0037264 A1 discloses an method for enabling a customer, who has access to a customer system and a mobile phone with associated phone number, to order a deliverable offered by a merchant system at a certain price.

US 2006/0294190 A1 discloses a communication system which may include at least one wireless communication device and at least one electrical mail server for storing email messages for the at least one wireless communication device. Similar examples of related prior art are: US2006/294190, US2008/171575 and US2002/115424.

### Description of the invention

The present invention is defined by the appended independent claim 1 . Any other subject-matter outside the scope of protection of the claim is to be regarded as examples not in accordance with the invention.

### Brief description of the drawings

Reference will be made by way of example to the accompanying drawings in which
- Fig. 1: is their schematic depiction of a system for billing a user of a mobile communication device,
- Fig. 2: is a schematic depiction of a mobile communication device for use in the system in one embodiment and
- Fig. 3: is a schematic depiction of a mobile communication device for use in the system in another embodiment.

### Detailed description of embodiments of the invention

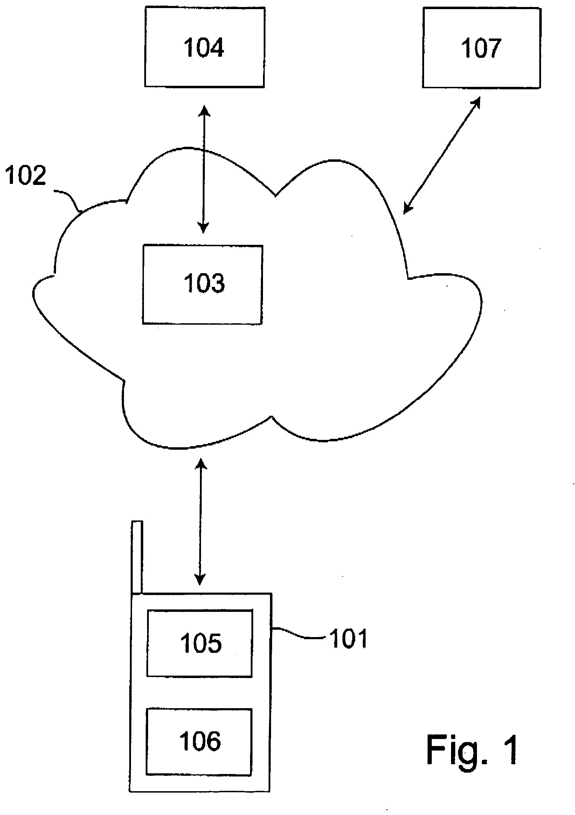

Figure 1 shows a schematic block diagram of a system for billing a user of a mobile communication device 101. The mobile communication device 101 may be a cellular phone, PDA or the like, and can be connected to the mobile communication network (PLMN) 102 via a radio access network that is not shown in figure 1. The PLMN 102 may be configured according to the GSM standard (GSM: Global System for Mobile Communication) or to the UMTS standard (UMTS: Universal Mobile Telecommunications System), for example, and may comprise a circuit switched domain and a packet switched domain. The mobile communication device 101 may access the PLMN 102 via a radio access network that may be configured as GERAN (GSM EDGE Radio Access Network) or UTRAN (UMTS Terrestrial Radio Access Network), for example.

The PLMN 102 provides a short message service (SMS), which, in principle, is known to a person skilled in the art. As common in the art, the SMS uses signaling channels of the PLMN's 102 circuit switched domain to transport messages, such as, for example, the SDCCH (Stand Alone Dedicated Control Channel) or the FACCH (Fast Associated Control Channel). Within the PLMN 102, SMS messages are addressed using an MSISDN (Mobile Subscriber Integrated Services Digital Network Number) of the intended recipient and are forwarded by short message service centers (SMSCs), one of which is shown in figure 1 with the reference numeral 103.

The SMSC 103 is connected to a server 104 of a payment provider, which offers a payment service based on the premium SMS (PSMS) mechanism. For this purpose, the server 104 is able to send and/or receive SMS messages. In one embodiment, the SMSC 103 forwards messages from and to the server 104 as if the server 104 was a mobile device receiving or sending an SMS message. However, it is likewise possible that the server 104 is connected to the SMSC 103 via an IP-based network connection (IP: Internet Protocol). In this embodiment, the SMSC 103 receives SMS messages addressed to the server 104 and forwards the contents of the message via the IP-based connection. Likewise, the contents of SMS messages sent from the server 104 is passed from the server 104 to the SMSC 103 via the IP-based connection and the SMSC generates the SMS message, which is subsequently transmitted to the recipients via the PLMN 102 using SMS.

The payment provider has contracts with one or more service providers offering services with costs that are paid via the payment provider, or the payment provider offers own services with costs.

In the embodiment shown in figure 1, the service with costs is offered by another server 107, which may be accessible with the mobile communication device 101. A connection between the mobile communication device 101 and the server 107 may be established via the PLMN 102 (as shown in figure 1), particularly via the packet switches domain of the PLMN 102, or via another network to which the mobile communication device can be connected. An example of a service with costs, which is accessible by means of the mobile communication device, is a web-based service for downloading data, such as for example, audio or video files or software applications, to the mobile communication device. In alternative embodiments, the user may access the service with costs in a different way.

In the process of charging the user for utilizing the service, an SMS message, which is referred to as consent message hereinafter, is sent from the mobile communication device 101 to the server 104. The consent message is generated in a message generating component 105 of the mobile communication device 101, after a trigger component 106 has instructed the message generating component 105 to generate the consent message. After having generated the consent message, the message generating component controls the mobile communication device 101 to send the consent message to the server 104 via the interface connecting the mobile communication device 101 with the PLMN 102. The consent message is addressed using the MSISDN assigned to the server 104. This MSISDN may be pre-stored in the message generating component or the MSISDN may be provided in connection with the utilization of service with costs. The provision of the MSISDN will be described in greater detail below.

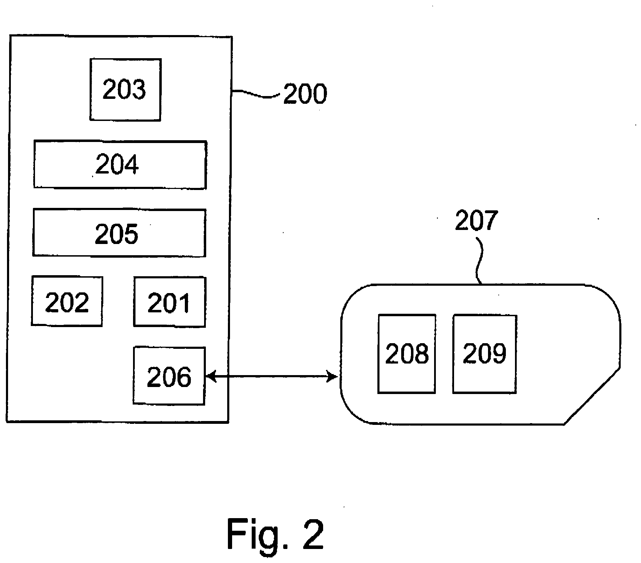

In one embodiment, the message generating component 105 prompts the user to confirm that the consent message shall be sent. This can be done by presenting an information that a consent will be sent at a display unit 204 of the mobile communication device 101 (see figure 2) and by allowing the user to confirm the consent message by actuating an input unit 205 (see figure 2) of the mobile communication device. However, if the user gives his consent to the payment in another way - for example, via a webpage - the confirmation can be dispensed with. Therefore, in another embodiment, no user interaction is required for generating and transmitting the consent message. However, the user may be informed that a consent message has been sent.

As one alternative, a mobile terminating premium SMS (MT-PSMS) mechanism is provided. Here, the consent message is sent to the server 104 at first and the server 104 answers the consent message with a PSMS message that is sent to the mobile communication device 101. The premium SMS message is charged to the user and the charged amount appears on the user's telephone bill. In one embodiment, the premium SMS is not charged to the user until the SMSC receives a confirmation from the mobile communication device 101 that the premium SMS has been accepted. In this case, the SMSC informs the server 104 about the receipt of the confirmation. The receipt of the confirmation of the acceptance of the premium SMS serves as confirmation of the consent of the user to be charged. However, since the consent of the user yields from the consent message, the mere transmission of the premium SMS could be charged to the user.

In another embodiment, a mobile originating premium SMS (MO-PSMS) mechanism is provided. In this embodiment, the consent message sent from the mobile communication device 101 to the server 104 corresponds to the premium SMS message and the receipt of the message in the SMSC or in the server 104 results in the billing of the user. The amount charged to the user may again appear on the user's telephone bill.

In both cases, i.e. in case an MT-PSMS or an MO-PSMS mechanism is provided, the consent message preferably includes a predetermined content specifying that the message is a consent message. The person skilled in the art knows that SMS messages like the consent message usually comprise a header and a body. The predetermined content may be a keyword in the body of the message and/or predetermined information in the header of the message. If services with different costs are provided, the consent message also specifies the service or the amount due for utilizing the service. Again, this may be done by means of a predetermined keyword in the body or the header of the consent message, which allows the server 104 - or the SMSC 103, if the amount is determined in the SMSC 103 - to determine the amount that is to be charged to the user. The keyword is selected from a plurality of keywords by the trigger component 105, or the keyword is provided to the mobile communication device 101 in connection with the utilization of the service, as it will be described below.

The trigger component 106 of the mobile communication device 101 controls the message generating component 105 to generate the consent message, when a predetermined event, which is referred to as trigger event hereinafter, is detected in the trigger component. The event can be realized by the trigger component 106 itself or by another component of the mobile communication device 101 that signalizes the occurrence of the event to the trigger component 106.

In principle, any event that can be realized in the mobile communication device 101 can be a trigger event leading to the generation and sending of the consent message.

In particular, the trigger event may be the receipt of a predetermined message, which is referred to as trigger message hereinafter. The trigger message may be an SMS message sent to the mobile communication device 101 by the server 104 of the payment provider or by the server 107 of the service provider. As an alternative, the trigger message may be sent via an existing IP connection between server 104 or the server 107 and the mobile communication device 101. Particularly, this is practicable, if the user access the server 107 providing the service with costs via an IP connection. Preferably, the trigger message is addressed directly to the trigger component 106 in such a way that it is forwarded to the trigger component 105 without presenting the message to the user.

The trigger message includes a predetermined content that allows the trigger component 106 to identify the message as trigger message. Moreover, the trigger message specifies the MSISDN assigned the server 104 in case this MSISDN is not stored in the message generating component 105. Furthermore, the trigger message may identify the service or the amount due for utilizing the service, if several services with different costs are provided. In particular, the trigger message may comprise the keyword that is assigned to the service or the amount. If the MSISDN assigned to the server 104 and/or information identifying the amount due for utilizing the service are included in the trigger message, the trigger component 106 reads out these data and passes them to the message generating component 105, which uses the information to generate the consent message.

In order to prevent fraudulent use, the trigger message may contain a cryptographic security feature that has to be verified successfully in the trigger component 106 before the trigger component 106 instructs the message generating component 105 to generate the consent message. The security feature may be a digital signature or another encrypted part of the trigger message that is verified using a digital certificate. The digital certificate may be issued by the payment provider and securely stored in the mobile communication device 101.

Another possible trigger event is a call received in the mobile communication device 101 from a predetermined caller MSISDN. The call may be initiated automatically by server 104 of the payment provider or by the server 107 of the service provider, when the user utilizes a service with costs.

The aforementioned trigger events, i.e. the receipt of a trigger message or a call, are especially suitable for triggering the payment process in case the user interacts with the server 107 of the service provider, when utilizing the service. In particular, this may be the case if the service allows the user to download data to the mobile communication device 101. Here, the trigger message can be sent to the mobile communication device 101 or the call can be initiated, when the user orders the data to be downloaded and gives his consent to the payment of the charge due for the download. In this embodiment, a confirmation of the user for sending the consent message can be dispensed with, since the user has given his consent with the order.

Another example of a trigger event that can be detected in the mobile communication device 101 is the entrance of the mobile communication device 101 in a certain cell of the cellular radio access network. In a cellular radio access network, a unique cell ID (identification) is assigned to each cell and the identification is broadcasted within the cell. Thus, the trigger component 105 can control the message generating component 106 to generate and send the consent message when a predetermined cell ID is received for the first time. The predetermined cell ID may be stored in the trigger component 106.

Using the entrance of the mobile communication device 101 into a certain cell as a trigger event is especially advantageous in connection with location dependent services. One example of such a service is the payment of toll collected in a certain region. Here, the trigger component 106 can instruct the message generating component 105 to generate and send the consent message when the mobile communication device 101 enters a cell of the radio access network, which belongs to the region where the toll is collected.

In figure 2, a block diagram of the mobile communication device 101 in one embodiment is schematically depicted.

The mobile communication device 101 comprises a mobile terminal 200 including a main processor 201 for controlling the operation of the mobile terminal 200. A memory unit 202 is coupled to the main processor 201 for storing data and applications that can be run on the main processor 201. The mobile terminal 200 comprises one or more communication interfaces for establishing data connections. Particularly, the mobile terminal 200 provides a radio interface 203 for connecting the mobile terminal 200 wirelessly to the PLMN 102 via the radio access network. Furthermore, the mobile terminal 200 comprises a display unit 204 and an input unit 205, which can be operated by the user of the mobile communication device 101. The input unit 205 may be configured as a keypad and/or a touch screen that also forms the display unit 204.

By means of a card reader unit 206, the mobile terminal 200 can be connected to a subscriber identification module 207 to form the mobile communication device 101. The subscriber identification module 207 is a so-called smart card, which can be inserted into a card receptacle of the mobile terminal 200 that holds the card in a position, in which its contact elements are connected to corresponding contact elements of the card reader unit 206 of the mobile terminal 200. The card receptacle and the card reader unit 206 are usually arranged within a battery compartment of the mobile terminal 200, which is accessible by the user of the mobile communication device 101.

According the type of the PLMN 102, the subscriber identification module 207 may be configured as a subscriber identity module (SIM) according to the GSM standard or as a universal subscriber identity module (USIM) according to the UMTS standard, for example. It comprises a microprocessor 208 and a nonvolatile memory 209 and stores pre-configured user-related and network-related data, particularly data identifying the user and data for authenticating the user or his mobile communication device 101 to the cellular mobile network 102. Moreover, it may store personal data of the user and additional applications run on the microprocessor 208.

In one embodiment, the message generating component 105 and trigger component 106 are configured as software applications run on the main processor 201 of the mobile terminal 200. The software code may be stored in the memory unit 202 of the mobile terminal.

In another embodiment, the message generating component 105 and the trigger component 106 are configured as a software application run on the microprocessor 208 of the subscriber identification module 207. Here, the corresponding software code may be stored in the memory 209 of the subscriber identification module 207.

For communicating with the mobile terminal 200, the software may implement commands of the SIM application toolkit (SAT) specified in the specification GSM 11.14 of the 3^{rd} generation project partnership (3GPP) if the subscriber identification module 207 is a SIM according the GSM standard or the adapter module 301 may implement the USIM application toolkit (USAT) specified in the specification TS 31.111 of the 3GPP if the subscriber identification module 207 is a USIM. The SAT or USAT allows applications run in the subscriber identification module 207 to access functions of the mobile terminal 200 and particularly comprises so-called proactive commands by means of which the subscriber identification module 207 is able to access the functions of the mobile terminal 200 on its own initiative.

In particular, the message generating component 105 may use proactive (U)SAT commands to instruct the mobile terminal 200 to send the consent message generated in the message generating component 106 to the PLMN 102. If it is provided that the trigger component is responsive to a trigger message sent to the mobile communication device 101, (U)SAT commands can be used to instruct the mobile terminal 200 to forward the trigger message transparently to the trigger component 106 in the subscriber identification module 207.

Due to the possibility to use standardized (U)SAT commands, it is easier to implement the functionalities of the message generating component 105 and the trigger component 106 in the subscriber identification module 207 than in the mobile terminal 200, because the internal interfaces in the mobile terminal 200 are predominantly not standardized so the no standardized commands can be used.

In both embodiments described before, i.e. if the message generating component 105 and trigger component 106 are configured as software modules run in the mobile terminal 200 or in the subscriber identification module 207, the message generating component 105 and the trigger component 106 can be retrofitted in the mobile communication device 101. For this purpose, the software can be provided to the user via the Internet or in another way, and the user can install the software in the mobile terminal 200 or in the subscriber identification module 207. For installing the software modules in the subscriber identification module 207, it is also possible to use the so-called over the air (OTA) technology as described, for example, in ETSI TS 102 225 and in 3GPP TS 23.048, which allows for updating or changing data and/or applications in the subscriber identification module 207.

However, in the subscriber identification module 207 software can only be installed, if the installation is authorized by the operator of the PLMN 102. Usually, the software code has to be encrypted using a key, which is shared between the network operator and the subscriber identification module 207. The subscriber identification module 207 decrypts the code using a corresponding decryption key thereby confirming that the code originates from the network operator or the installation is authorized by the network operator. Thus, it is not possible for a payment provider to provide the software modules to the user without involving the network operator.

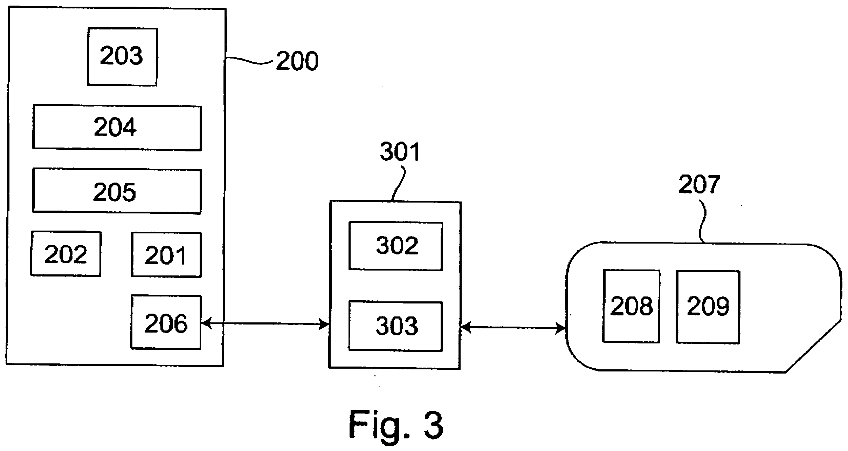

In figure 3, another embodiment of the mobile communication device 101 is depicted in a schematic block diagram. The mobile communication device 101 comprises a mobile terminal 200 and a subscriber identification module 207, which are configured in the same way as described before. The embodiment shown in figure 3 differs from the embodiment of the mobile communication device 101 shown in figure 2 in that the subscriber identification module 207 is not connected directly to the mobile terminal 200 or its card reader unit 206, but via an adapter module 301.

The adapter module 301 comprises a microprocessor 302 and a memory unit 303 for storing data and applications that can be run on the microprocessor 302. The adapter module 301 is connected between the mobile terminal 200 and the subscriber identification module 207 and acts as a so-called man in the middle between the mobile terminal 200 and the subscriber identification module 207. Hence, communication signals between the mobile terminal 200 and the subscriber identification module 207 are exchanged via the adapter module 301.

The adapter module 301 is capable of manipulating or modifying the data exchanged between the mobile terminal 200 and the subscriber identification module 207. Moreover, the adapter module 301 is capable of initiating a communication with the mobile terminal 200 to interact proactively with the mobile terminal 200 and with the subscriber identification module 207. For this purpose, the adapter module 301 may implement the SAT, if the subscriber identification module 207 is a SIM according the GSM standard, or the adapter module 301 may implement the USAT, if the subscriber identification module 207 is a USIM. By implementing the SAT or USAT in the adapter module 301, the adapter module 301 is able to access the functions of the mobile terminal 200 in the same way as the subscriber identification module 207.

For connecting the adapter module 301 between the mobile terminal 200 and the subscriber identification module 207, the adapter module 301 comprises a contacting element, which can be inserted into the card receptacle of the mobile terminal 200 and which includes electric contacts for contacting the contact elements of the card reader unit 206. Further electrical contacts are provided for contacting the electric contacts of the subscriber identification module 207. The electric contacts for connecting the adapter module 301 to the mobile terminal 200 and the electric contacts for connecting the adapter module 301 are connected to the microprocessor 302 of the adapter module 301.

As one of the electric contacts of the card reader unit 206 of the mobile terminal 200 acts as a power supply for the subscriber identification module 207, the adapter module 301 can also be supplied with power via this electric contact. Moreover the adapter module 301 is able to forward data received via an electric contact of the card reader unit 206 to the corresponding electric contact of the subscriber identification module 207 and vice versa. The forwarded data may be modified by the microprocessor 302 of the adapter module 301 or the adapter module 301 may leave the data unmodified, thereby allowing a normal communication between the mobile terminal 200 and the subscriber identification module 207. Moreover, proactive commands can be sent from adapter module 301 to the mobile terminal 200 via the electric contact, which are provided for sending commands from the subscriber module 207 to the mobile terminal 200.

In one exemplary embodiment, the adapter module 301 comprises a thin contacting element, which has essentially the same shape as the subscriber identification module 207 and which can be inserted into the card receptacle of the mobile terminal 200 between the electric contacts of the card reader unit 206 and the subscriber identification module 207. On one surface, the contacting element comprises contact elements for contacting the contact elements of the subscriber Identification module 207 and on the opposite surface, contact elements are arranged for contacting the contact elements of the card reader unit 206. The contact elements are connected to the microprocessor 302 of the adapter module 301. The microprocessor 302 and the memory unit 303 of the adapter module 301 may be mounted on a circuit board, which is connected to the contacting element by means of a flexible wire, thereby allowing placing the circuit board into the battery compartment of the mobile terminal 200 together with the battery. As an alternative, the microprocessor 302 and the memory unit 303 may be included in a chip that is mounted on the contacting element. In this embodiment, the subscriber identification module 207 is being provided with a cutting for accepting the chip.

In another embodiment, the adapter module 301 comprises a contacting element that has essentially the same shape and thickness as the subscriber identification module 207 and that can be inserted into the card receptacle of the mobile terminal 200 to contact the contact elements of the card reader unit 206. The contacting element is connected to a circuit board via one or more flexible wires. The microprocessor 302 and the memory unit 303 are mounted on the circuit board and in addition, the circuit board comprises a card reader unit connected to the microprocessor 302 for receiving the adapter module 301 to the subscriber identification module 207. The circuit board may be thin enough to place it into the battery compartment of the mobile terminal 200.

The message generating component 105 and the trigger component 106 are configured as software modules that are run on the microprocessor 302 of the adapter module 301. The corresponding software code may be stored in the memory unit of the adapter module 301. Due to the configuration of the adapter module 201 described before, the software can interact with the mobile terminal scriber identification module 207. Particularly, this means, the SAT commands can be used for communicating with the mobile terminal 200, if the subscriber identification module 207 is a SIM or the USAT commands can be used if the subscriber identification module 207 is a USIM. As in the embodiment providing the installation of the software module in the subscriber identification module 207, the message generating component 105 can use (U)SAT commands to instruct the mobile terminal 200 to send the consent message to the PLMN 102 and (U)SAT commands can be used to instruct the mobile terminal 202 transparently forward a trigger message to the trigger component 106. Thus, the implementation of the message generating component 105 and the trigger component 106 and the adapter module 301 offers essentially the same advantages as the installation of these components in the subscriber identification module 207.

Moreover, an adapter module 301 with a pre-installed message generating component 105 and trigger component 106 can be provided to the user by the payment provider in order to allow the user to retrofit his mobile communication device 101. This can be done by the user by simply inserting the adapter module 301 in his mobile communication device 101 without having to install software in the mobile terminal 200 or in the subscriber identification module 207. An authorization of the network operator is not necessary for using the adapter module 301. From the point of view of the payment provider, this is another advantage of the adapter module 301.

In the claims, the word "comprising" does not exclude other elements or steps, and the indefinite article "a" or "an" does not exclude a plurality. A single processor or other unit may fulfill the functions of several items recited in the claims. The mere fact that certain measures are recited in mutually different dependent claims does not indicate that a combination of these measured cannot be used to advantage.

A computer program may be stored/distributed on a suitable medium, such as an optical storage medium or a solid-state medium supplied together with or as part of other hardware, but may also be distributed in other forms, such as via the Internet or other wired or wireless telecommunication systems.

Any reference signs in the claims should not be construed as limiting the scope, as long as they do not depart from the scope of the invention as it is depicted in the appended claim.

## Claims

1. An adapter module (301) for charging a user of mobile communication device (101) connected to a communication network (102) the adapter module (301) being connectable between a mobile terminal (200) of the mobile communication device (101) and a subscriber identification module (207), **characterized in that** the adapter module (301) comprising a trigger unit (106) and a message generating unit (105), the trigger unit (106) being coupled to the message generating unit (105), the trigger unit (106) being adapted to initiate generation of a consent message in the message generating unit (105), when the trigger unit (106) detects a trigger event, the trigger event being a predetermined event realizable in the mobile communication device (101), wherein the trigger event comprises an entrance of the mobile communication device (101) in a predetermined radio cell of the communication network (102), the message generating unit (105) being adapted to automatically generate the consent message such that no user interaction is required for generating the consent message, and the message generating unit (105) being further adapted to control the mobile communication device (101) to send the message to the communication network (102), the consent message prompting a payment process, wherein the communication network is a cellular radio access network, and a unique cell Identification, cell ID, is assigned to each cell and the identification is broadcasted within the cell, thus that the trigger component (105) can control the message generating component (106) to generate and send the consent message when a predetermined cell ID is received for the first time, the predetermined cell ID is stored in the trigger component (106), and that the message generating component (105) uses proactive (U)SIM application toolkit, (U)SAT, commands to instruct the mobile terminal (200) to send the consent message generated in the message generating component (106) to the Public Land Mobile Network, PLMN, (102).

## Patentansprüche

1. Adaptermodul (301) zum Abrechnen eines Nutzers einer Mobilkommunikationsvorrichtung (101), die mit einem Kommunikationsnetz (102) verbunden ist, wobei das Adaptermodul (301) zwischen einem mobilen Endgerät (200) der Mobilkommunikationsvorrichtung (102) und einem Teilnehmeridentifikationsmodul (SIM, 207) verbindbar ist, **dadurch gekennzeichnet, dass** das Adaptermodul (301) eine Auslöseeinheit (106) und eine Nachrichterzeugungseinheit (105) aufweist, wobei die Auslöseeinheit (106) an die Nachrichterzeugungseinheit (105) gekoppelt ist, wobei die Auslöseeinheit (106) eingerichtet ist, die Erzeugung einer Einverständnisnachricht in der Nachrichterzeugungseinheit (105) zu initiieren, wenn die Auslöseeinheit (106) ein Auslöseereignis detektiert, wobei das Auslöseereignis ein vorgegebenes Ereignis ist, das in der Mobilkommunikationsvorrichtung (101) realisierbar ist, wobei das Auslöseereignis den Eintritt der Mobilkommunikationsvorrichtung (10) in eine vorgegebene Funkzelle des Kommunikationsnetzes (102) umfasst, wobei die Nachrichterzeugungseinheit (105) eingerichtet ist, die Einverständnisnachricht derart automatisch zu erzeugen, dass keine Nutzerinteraktion zur Erzeugung der Einverständnisnachricht erforderlich ist, und wobei die Nachrichterzeugungseinheit (105) ferner eingerichtet ist, die Mobilkommunikationsvorrichtung (101) anzusteuern, die Nachricht an das Kommunikationsnetz (102) zu senden, wobei die Einverständnisnachricht einen Bezahlungsvorgang veranlasst, wobei das Kommunikationsnetz ein zelluläres Funkzugangsnetz ist, und eine eindeutige Zellkennung, Zell-ID, jeder Zelle zugeordnet ist und die Kennung innerhalb der Zelle verbreitet wird, so dass die Auslösekomponente (105) die Nachrichterzeugungskomponente (106) ansteuern kann, die Einverständnisnachricht zu erzeugen und zu senden, wenn eine vorgegebene Zell-ID das erste Mal empfangen wird, die vorgegebene Zell-ID in der Auslösekomponente (106) gespeichert wird, und dass die Nachrichterzeugungskomponente (105) proaktive (U)SIM Application Toolkit, (U)SAT, -Anweisungen verwendet, um das mobile Endgerät (200) zu instruieren, die Einverständnisnachricht, die in der Nachrichterzeugungskomponente (106) erzeugt wird, an das PLMN (Public Land Mobile Network, öffentliches terrestrisches Mobilfunknetz) (102) zu senden.

## Revendications

1. Module adaptateur (301) pour facturer un utilisateur d'un dispositif de communication mobile (101) connecté à un réseau de communication (102), le module adaptateur (301) pouvant être connecté entre un terminal mobile (200) du dispositif de communication mobile (101) et un module d'identification d'abonné (207), **caractérisé en ce que** le module adaptateur (301) comprend une unité de déclenchement (106) et une unité de génération de message (105), l'unité de déclenchement (106) étant liée à l'unité de génération de message (105), l'unité de déclenchement (106) étant adaptée pour initier la génération d'un message de consentement dans l'unité de génération de message (105), lorsque l'unité de déclenchement (106) détecte un événement de déclenchement, l'événement de déclenchement étant un événement prédéterminé réalisable dans le dispositif de communication mobile (101), l'événement de déclenchement comprenant une entrée du dispositif de communication mobile (101) dans une cellule radio prédéterminée du réseau de communication (102), l'unité de génération de message (105) étant adaptée pour générer automatiquement le message de consentement de sorte qu'aucune interaction de l'utilisateur n'est requise pour générer le message de consentement, et l'unité de génération de message (105) étant en outre adaptée pour le contrôle du dispositif de communication mobile (101) d'envoyer le message au réseau de communication (102), le message de consentement ordonnant un processus de paiement, le réseau de communication étant un réseau d'accès radio cellulaire, et un identifiant de cellule unique, ID de cellule, étant assigné à chaque cellule et l'identifiant étant diffusé dans la cellule, de sorte que le composant de déclenchement (105) peut contrôler le composant de génération de message (106) de générer et d'envoyer le message de consentement lorsqu'un identifiant de cellule prédéterminé est reçu pour la première fois, l'identifiant de cellule prédéterminé étant stocké dans le composant de déclenchement (106), et que le composant de génération de message (105) utilise des instructions proactives de (U)SIM Application Toolkit (U)SAT, pour instruire le terminal mobile (200) d'envoyer le message de consentement généré dans le composant de génération de message (106) au PLMN (Public Land Mobile Network, réseau mobile terrestre public) (102).
